# EUROPEAN PATENT APPLICATION

(11) **EP 1 965 095 A1**
(43) Date of publication of application: **03.09.2008**
(21) Application number: 08075118.3
(22) Date of filing: 15.02.2008
(51) Int. Cl.: F16H 1/14

(54) **Bidirectional bevel gear assembly for transmission of movement from a driving shaft to a driven shaft**

(30) Priority: 27.02.2007 IT MI20070379
(71) Applicant: Baruffaldi S.p.A., Tribiano (MI) (IT)
(72) Inventor: Boffelli, Piercarlo, Tribiano (IT); Bellotti, Claudio, Tribiano (IT); Depoli, Erminio, Tribiano (IT); Natale, Fabio, Tribiano (IT)
(74) Representative: Raimondi, Margherita

(57) **Abstract**

Bevel gear assembly for bidirectional transmission of the movement from a driving shaft (40, 140) extending in a longitudinal direction (X-X) to a driven shaft (10) extending in a transverse direction (Y-Y) and comprising a driven bevel gear (20) integral with the driven shaft (10) and a driving bevel gear (30;130) integral with the driving shaft (40;140), said driving bevel gear being (30;130) being arranged ahead of or after the driven bevel gear (20) in the longitudinal direction (X-X) of the driving shaft (40;140).

## Description

The present invention relates to a bevel gear assembly for bidirectional transmission of the movement from a driving shaft, extending in a longitudinal direction, to a driven shaft extending in a transverse direction.

It is known, for example in the technical sector of devices for cooling coolants used in vehicles, that there exists the need to perform rotation of a fan able to force air onto the radiator containing the recirculating fluid, said fan being normally driven by a belt connected to the driving shaft from which it receives the movement.

It is also known that, in certain applications, such as for example in the case of buses, coaches and the like, the radiator unit and fan must be positioned parallel to the side of the vehicle and therefore to the axis of the driving shaft owing to the lack of space available in the engine compartment which does not allow housing of the unit along the longitudinal axis of the vehicle and in a direction perpendicular to the latter.

This lateral arrangement of the unit results in an alignment of the fan actuating shaft in a direction perpendicular to that of the driving shaft, resulting in the need for the intervening arrangement of angular transmissions for the movement.

Corresponding movement transmission units are also known, said units consisting of a bevel gear transmission comprising a first input bevel gear connected to the driving shaft and a second driven bevel gear connected to the fan support shaft.

These gears must also be bidirectional, namely allow the rotational operation of the fan in a clockwise direction or anti-clockwise direction; for this purpose it is envisaged that the bevel gear assembly causes reversal of the fan movement by means of displacement of the driven gear which is arranged as a mirror-image of itself on a support shaft extended along the axis of the driven shaft.

Although fulfilling their function, these bevel gear assemblies nevertheless have the drawback arising from the fact that the mirror displacement of the driven bevel gear results in an increase in the overall dimensions in the direction of the driven shaft, extending in the transverse direction, this constituting a problem in that the space available in the transverse direction of the driven shaft is limited, complicating moreover assembly and maintenance thereof.

The technical problem which is posed, therefore, is to provide a bevel gear assembly for transmission of the movement from a driving shaft arranged in a longitudinal direction to a driven shaft extending in a transverse direction, by means of which it possible to achieve reversal in the direction of rotation of the driven shaft without substantially increasing the overall dimensions in the transverse direction of extension thereof.

These results are achieved according to the present invention by a bevel gear assembly for bidirectional transmission of the movement from a driving shaft extending in a longitudinal direction X-X to a driven shaft extending in a transverse direction Y-Y and comprising a driven bevel gear integral with the driven shaft and a driving bevel gear integral with the driving shaft, said driving bevel gear being arranged ahead of or after the driven bevel gear in the longitudinal direction X-X of the driving shaft.

Further details may be obtained from the following description of a non-limiting example of embodiment of the subject of the present invention provided with reference to the accompanying drawings, in which:
- Figure 1 shows a schematic cross-section of a first example of embodiment of the bevel gear assembly according to the present invention; and
- Figure 2 shows a cross-section similar to that of Fig. 1 of a second example of embodiment of the bevel gear assembly according to the present invention.

As shown and in order to identify the different relative positions of the various component parts of the bevel gear assembly according to the present invention, it will be assumed, solely for the sake of convenience of the description and without a limiting meaning, that there is a pair of reference axes, in a longitudinal direction X-X and transverse direction Y-Y, respectively, as well as two respective positions after and ahead in the longitudinal direction and transverse direction, respectively, close to/far from the side of the fan to be operated and the input side of the driving shaft.

With reference to the directions/positions defined and

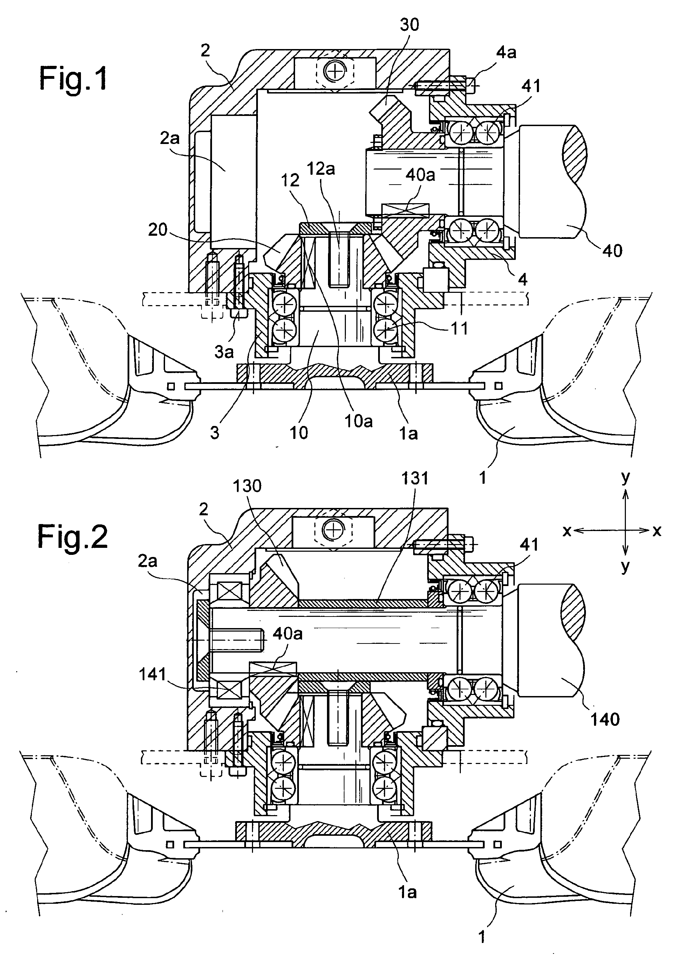

Fig. 1, the bevel gear assembly according to the present invention comprises a driven bevel gear 20 mounted on the associated shaft 10 and connected rotationally thereto by means of a key 10a.

The driven bevel gear 20 is fixed to the driven shaft 10 by means of a thrust bearing 12 fixed to the shaft by means of a coaxial screw 12a; on the opposite side, the driven shaft 10 has a flange 1a, to which the fan 1 to be rotationally operated is constrained.

The driven shaft 10 is in turn supported by a bearing 11 mounted on a cover 3 which can be constrained by means of screws 3a to a housing 2 for the entire bevel gear assembly.

The driven bevel gear 10 meshes with a driving bevel gear 30 mounted on the driving shaft 40 extending in the longitudinal direction X-X and supported by a bearing 41 mounted on a support 4 which can be constrained by means of screws 4a to the said housing 2; the rotational connection between bevel gear 30 and driving shaft 40 is obtained by means of a key 40a.

In the example according to Fig, 1 the driving bevel gear 30 is arranged ahead of the driven bevel gear 20 in the axial direction X-X; in this way the direction of rotation of the driven shaft 10 is opposite to the direction of rotation of the driving shaft 40.

Fig. 2 shows a further embodiment of the bevel gear assembly according to the present invention which, in this configuration, has a driving shaft 140 extended axially in the longitudinal direction X-X as far as the end of the casing 2a and an associated driving bevel gear 130 arranged after the driven bevel gear 10 in the longitudinal direction X-X and in a mirror-image arrangement with respect to the solution shown in Fig. 1.

In detail the shaft 140 is supported by a second bearing 141 housed inside a respective seat 2a of the casing 2 and the driving bevel gear 130 is kept in position by means of a spacer 131 arranged between the first bearing 41 and the driving bevel gear 130.

In this way the direction of rotation of the driven shaft 10 and therefore the fan 1 is same as the direction of rotation of the driving shaft 140.

It is therefore clear how with the bevel gear assembly according to the invention it is possible to obtain rotational operation of the fan in one direction or in the opposite direction by means of a displacement of the driving bevel gear in the longitudinal direction X-X; this means that the reversal of the movement is obtained without an increase of the dimensions in the transverse direction Y-Y and consequently the bevel gear is compact and can be easily assembled also in confined spaces such as those which exist for example in vehicles such as buses, coaches and the like.

## Claims

1. Bevel gear assembly for bidirectional transmission of the movement from a driving shaft (40; 140) extending in a longitudinal direction (X-X) to a driven shaft (Y-Y) extending in a transverse direction (Y-Y) and comprising a driven bevel gear (20) integral with the driven shaft (10) and a driving bevel gear (30; 130) integral with the driving shaft (40; 140), **characterized in that** said driving bevel gear (30;130) is arranged ahead of or after the driven bevel gear (20) in the longitudinal direction (X-X) of the driving shaft (40; 140).

2. Assembly according to Claim 1, **characterized in that** the extension in the transverse direction (Y-Y) of the driven shaft (10) is contained after the space occupied in the longitudinal direction (X-X) by the driving shaft (40; 140).

3. Assembly according to Claim 1, **characterized in that** the extension in the longitudinal direction (X-X) of the driving shaft (40) is contained ahead of the space occupied in the longitudinal direction by the driven shaft (10).

4. Assembly according to Claim 3, **characterized in that** said driving shaft (40) is supported by a first bearing (41) arranged ahead of the transverse axis (Y-Y) in the longitudinal direction (X-X).

5. Assembly according to Claim 4, **characterized in that** said first bearing (41) is mounted on a support (4) which can be constrained by means of screws (4a) to the said housing (2).

6. Assembly according to Claim 1, **characterized in that** the length, in the longitudinal direction (X-X), of the driving shaft (140) extends beyond the space occupied in the longitudinal direction by the driven shaft (10).

7. Assembly according to Claim 6, **characterized in that** said driving shaft (140) is mounted on a first bearing (41) arranged ahead of the transverse axis (Y-Y) in the longitudinal direction (X-X) and on a second bearing (141) arranged after the transverse axis (Y-Y) of the driven shaft (10) in the longitudinal direction (X-X).

8. Assembly according to Claim 7, **characterized in that** said second bearing (141) is housed inside a respective seat (2a) of the casing (2) arranged on the opposite side to the input side of the shaft in the longitudinal direction (X-X).

9. Assembly according to Claim 8, **characterized in that** the driving bevel gear (130) is kept in position by means of a spacer (131) coaxially arranged between the first bearing (41) and the second bearing (141).

10. Assembly according to Claim 1, **characterized in that** said driving shaft is the driving shaft of a vehicle.

11. Assembly according to Claim 1, **characterized in that** said driving shaft is connected to the driving shaft of a vehicle.

12. Assembly according to Claim 1, **characterized in that** said driven shaft (10) is the shaft for operating a fan for cooling a vehicle.
